# EUROPEAN PATENT APPLICATION

(11) **EP 1 287 745 A1**
(43) Date of publication of application: **05.03.2003**
(21) Application number: 01119702.7
(22) Date of filing: 24.08.2001
(51) Int. Cl.: A23G 3/30

(54) **Chewable compositions with probiotic agents**

(71) Applicant: THE PROCTER & GAMBLE COMPANY, Cincinnati, Ohio 45202 (US)
(72) Inventor: Gonzales, Denis, 65100 Pescara (IT)
(74) Representative: Kremer, Véronique

(57) **Abstract**

The present invention relates to a chewable composition comprising a chewable base and a probiotic agent, preferably a lactic acid-producing microorganism, and even more preferably a spore-forming lactic acid producing microorganism. The chewable compositions allow reducing bad breath upon prolonged period of use.

## Description

### Field of the Invention

The present invention relates to chewable compositions and more particularly to chewable confectionery compositions for controlling odours, especially bad breath. The chewable compositions comprise a probiotic agent.

### Background of the Invention

In the oral care field, bad breath is rated by consumers as being one of the most frequent oral problems beside tartar build-up. In most of the case this problem originates from the mouth cavity due to either poor oral hygiene, or microbial metabolism of food and/or oral infections. Halitosis (morning breath or pathological situations) is mainly due to the growth of pathogens responsible for bad breath (mostly gram negative anaerobes producing malodorous compounds like volatiles sulfides compounds). Moreover, bad breath symptom not only deeply affects the social well being but might also be an indicator/precursor of more serious medical conditions.

There is thus a continuous need to overcome bad breath per oral treatment. This need has not been fully satisfied today, especially not the need to get bad odor control upon prolonged period of time.

It is thus an object of the present invention to provide a means suitable to be used easily at any moment of consumer life to control bad breath. More particularly it is an object of the present invention to provide a means suitable for easy daily use in a situation of modern active life that does not only deliver immediate odor control properties but is also able to control odor upon prolonged period of use, this while not exhibiting any detrimental particular side effect.

These objects have now surprisingly been met by providing a chewable composition comprising a chewable base and a probiotic agent.

Indeed the presence of a probiotic agent, namely a micro-organism exhibiting antagonistic properties against pathogens in host organism, in a chewable composition, allows the control of bad breath by limiting the growth of pathogen bacteria producing odorous compounds like volatiles sulfite responsible of bad breath. Furthermore providing probiotic agents in chewable compositions complies with customers' habits since chewable compositions have been culturally well accepted and present the undeniable benefit of being users friendly and portable as opposed to other oral "fresh breath" treatments such as mouth rinsing or brushing solutions.

In contrast to commercially available chewable compositions (typically chewing gum), which traditionally aim only on masking of malodors/bad breath during the time of flavors release, the chewable compositions according to the present invention offer a natural and long lasting odor control effect.

Without to be bound by any theory, it is speculated that in comparison to other oral treatments like mouthwashes, toothpaste, etc., chewable compositions have a longer time residency in the mouth, thus participating to the long lasting effect. But more importantly the long lasting odor control effect is obtained per the selection of the odor control material used herein, namely the probiotic agent and most preferably the spore-forming micro-organisms exhibiting antagonistic properties against undesirable strains of micro-organisms.

Probiotic agents are harmless, host organism compatible microorganisms that inhibit pathogens developments by competitive growth and/or production of metabolites.

The probiotic agents used herein have the ability to deliver antagonistic properties against undesirable pathogens which are known to cause unpleasant odors like for example the bacteria belonging to the family Enterobacteriaceae, e.g., Proteus mirabilis, Proteus vulgaris, Echerichia coli and Klebsiella that can in some occasions be located in the whole mouth area and throat. The metabolic activity of such pathogen bacteria which aims for satisfying the bacteria needs for energy and proliferation, leads to degraded odorous compounds as by products which are among others low molecular weight fatty acids, amines, mercaptan, indoles, ammonia, sulfide and the like. The preferred antagonistic microorganisms according to the present invention, namely lactic acid-producing microorganisms inhibit the growth of such pathogen microorganisms, by competing for substrate and generating a non-conducive acidic environment. The antagonistic properties of the lactic-acid producing microorganisms are also partly denoted their ability of producing other metabolites, like enzymes (e.g., lactoperoxidases), toxins, carbon dioxide, peroxides or antibiotics, so-called bacteriocines. As a consequence the probiotic agents prevent the formation of malodour, thereby reducing the total amount of malodour to be controlled.

Additionally beside the odor formation prevention benefits, other benefits are associated to the probiotic agents used herein. Indeed, the competitive inhibition of pathogen microorganisms will also result in reduction or even prevention of the occurrence of infection in the mouth and/or throughout the whole digestive apparel.

In a preferred embodiment the probiotic agents used herein are spore-forming lactic acid producing microorganisms, preferably *B. Coagulans*. These microorganisms have the ability to create very quickly an environment that is not suitable for the growth of pathogens. This is due to the rapid growth, high yield and reproducibility of such microorganisms in comparison to other lactic acid producing bacteria like *Lactobacillus acidophilus.* Furthermore these microorganisms are spore-forming microorganisms, i.e., they are able to survive longer and reproduce themselves in comparison to non spore-forming microorganisms. These spore-forming lactic acid producing microorganisms are particularly beneficial in providing long-lasting antagonistic properties against pathogens, typically long lasting odour control.

In the most preferred embodiment of the present invention the dormant form of the spore-forming lactic acid producing microorganisms, i.e., spores (preferably *B. Coagulans* spores, also called *L. sporogenes* spores) are used as the probiotic agents herein. These spores have the ability to germinate in the living form of the microorganisms, which exhibit antagonistic properties against undesirable pathogens. The use of such spores in the chewable compositions herein provides improved stability both during storage and use. Indeed the use of the spores herein provides an effective odour controlling chewable composition, which can be stored for long periods of time before its actual use, without risking that the odour control properties of the chewable composition is impaired. Actually, the use of these spores able storage stability upon prolonged periods of time up to the time the composition is used, and undergoes environmental changes (e.g., mastication in mouth of chewable compositions) that will create favourable environmental condition for the germination of the spores and hence growth of probiotics. Indeed, the genetic identity, the lactic acid-producing ability and the viability of the probiotic microorganisms when incorporating the microorganisms in the chewable composition in their spore form are not impaired upon prolonged periods of storage and are maintained upon prolonged periods of use (mastication/chewing).

Advantageously, in the embodiment herein wherein the spores as described herein are used, the chewable compositions according to the present invention retain their antagonistic properties against pathogens like the odour control capacity up to the time their are used, thereby providing chewable compositions with effective odour controlling ability, while using reduced total amount of odour control active.

### Background art of the invention

Probiotic agents are widely used, in various field including pharmaceutical field or food field, especially in yogurts.

Preferred probiotic agents according to the present invention namely *B. coagulans* (in living or spore form) have been described in various applications in the art for example in animal feedstuff (WO93/14187) or hygienic products for topical use (WO98/47374).

None of these references does disclose the chewable compositions according to the present invention with at least one probiotic agent, let alone lactic acid producing micro-organisms, nor spore-forming lactic acid producing micro-organisms in their living or dormant form, this especially not in association with the benefit provided, namely long lasting (bad breath) odour control properties.

### Summary of the Invention

The present invention relates to chewable compositions comprising a chewable base and a probiotic agent.

### Detailed description of the Invention

### Probiotic agents

According to the present invention the chewable compositions comprise as an essential component a probiotic agent.

By 'probiotic agent' it is meant herein any microorganism (including, but not limited to, bacteria, yeast, viruses or fungi) that form at least a part of the transient or endogenous flora or mouth flora, and thus have a beneficial propylactic and/or therapeutic effect on the host organisms. Probiotic agents are known by those skilled in the art to be safe.

Probiotic agents for use herein are preferably microorganisms exhibiting antagonistic properties against undesirable strains of microorganisms. Suitable microorganisms that exhibit antagonistic properties for use herein include bacteria, yeast, viruses or other microorganisms for instance fungi.

It is understood herein that by probiotic agent/micro-organism reference is made to the use of one species thereof or mixtures thereof.

Pathogens bacteria that cause bad breath are numerous (not exhaustively known and listed) and may belong to, for example, the families Enterobacteriaceae, Ascomycetes, Pseudomonadaceae and Micrococcaceae and the genus Streptococcus. Examples of species and genera are Pseudomonas, Candida albicans, Escherichia coli, Proteus mirabilis, Proteus vulgaris, Enterococcus, Klebsiella, Staphylococcus, Streptococcus etc.. It is to be noted that the microflora in the mouth area varies considerably from individuals to individuals.

Although not wishing to be bound by any particular theory, the probiotic activity of the microorganisms used herein is believed to result from competitive inhibition of growth of pathogens due to superior colonization (the probiotic microorganisms inhibit other microorganisms by competing for substrate), parasitism of undesirable microorganisms, and/or production of metabolites, including but not limited to, lactic acid, enzymes like lacto-peroxidases, toxins, carbon dioxide, peroxides or antibiotics, so-called bacteriocines and/or combinations thereof. The probiotic agents used herein have the ability to reduce the growth and hence patogenicity of many pathogens like the ones mentioned herein before.

It is speculated that the production of lactic acid inhibits the growth of putrefactive bioorganisms, by slightly altering the ambient mouth conditions, otherwise more favourable for pathogens growth. More particularly un-dissociated lactic acid has the tendency to penetrate the membrane of pathogens, lowering their intracellular pH and/or interfering with their metabolic processes such as oxidative phosphorylation, thereby inhibiting the growth of such pathogens.

Other metabolites further contribute to inhibit the growth of pathogens. For example carbon dioxide is believed to reduce membrane permeability. Hydrogen peroxide / Lactoperoxidase are believed to oxidise basic proteins and to destroy the "enzymes factories" (ribosomes) of pathogens. Bacteriocins are proteins or protein complexes with bactericidal activity. Indeed, bacteriocins have the ability to link to particular receptors on the cell wall of microorganisms, thereby affecting the functionality of the cell wall/membranes. Bacteriocins are also able to affect DNA-synthesis and protein synthesis.

The particularity of the probiotic agents herein is that they are naturally occurring microorganisms that are non-toxic and do not have any negative biological effect on humans.

One advantage afforded by the use of probiotic agents/microorganisms is that there is avoided an undesired selection pressure on the micro environment, such as favoring potential desease-promoting microorganisms and therewith the risk of developing pathogenic strains that are resistant to antibiotics and chemopharmaceutical preparations. Since the antimicrobial system is based on a natural, biological process, there is less risk of environmental ecological and toxic disturbances.

Highly preferred probiotic agents for use herein are lactic acid-producing microorganisms. Suitable lactic acid-producing microorganisms for use herein are microorganisms that exhibit antagonistic properties against undesirable strain of microorganisms by releasing amongst other metabolites, lactic acid.

Suitable lactic acid producing bacteria for use herein include those belonging to the genera Lactobacillus, Lactococcus, Pedioccocus and/or Leuconostoc, and preferably the species *Lactobacillus acidophilus, Lactobacillus curvatus, Lactobacillus plantarum, Lactobacillus jenseni, Lactobacillus casei*, *Lactobacillus fermentum, Lactococcus lactis*, *Pedioccocus acidilacti*, *Pedioccocus pentosaceus, Pedioccocus urinae* and/or *Leuconostoc mesenteroides.*

Even more preferred probiotic agents for use herein are the spore-forming microorganisms exhibiting antagonistic properties against pathogens, preferably the spore-forming lactic acid-producing microorganisms. These preferred microorganisms have the ability to survive in hostile environment (e.g., during the storage of chewable compositions) in spore form (dormant form). Sporulation is the development in microorganisms of bodies each wrapped in a protective coat (a natural process of micro encapsulation in a calcium-dipicolinic acid-peptidoglycan complex). Under favorable conditions, the spores germinate into viable bacilli (living form) and carry on their life activities. The spores/endospores suitable for use herein are heat-resistant, dehydrated resting cells that are formed intracellularly and contain a genome and all essential metabolic machinery. The spores are encased in a complex protective spore coat.

Suitable spore-forming lactic acid-producing microorganisms for use herein or spores thereof belong to the genus *Bacillus* and are typically selected from the group consisting *of Bacillus coagulans* (also called *Lactobacillus sporogenes), Bacillus subtilis, Bacillus laterosporus* and *Bacillus laevolacticus.* Other suitable spore-forming lactic acid producing micro-organisms for use herein and/or spores thereof are those belonging to the genus *Sporolactobacillus*, more particularly the species *Sporolactobacillus inulinus.* Highly preferred herein is the species *B. coagulans* (also called *L.sporogenes*) *(living form) or B coagulans spores (dormant form).*

*L. sporogenes* was first isolated from green malt and described in 1933 by L.M. Horowitz-Wlassowa and N.W. Nowotelnow. It was submitted as *L. sporogenes* in the fifth edition (1939) of 'Bergey's manual of Determinative Bacteriology' as well as mentioned in recognized scientific publication, Korean J. Appl. Microb. & Bioengin. (1985) 13:185-190, J. Pharmaceut. Soc. Korea (1977) vol XXIII, 1-Feb, 473-474. *L. sporogenes* was transferred to *Bacillus coagulans* in the seventh edition of 'Bergey's manual of Determinative Bacteriology' due to simplification in cataloguing. However in honour of the original discoverers the name *L*. *sporogenes* is used widely. Reference is also made to the taxonomical classification of *Sporolactobacillus* in L'integratore Nutrizionale 2 (1) 1999, Stabilita' di integratori con Sporolactobacillus, classificazione tassonomica by L. Marossi and all.

According to the Eighth Edition of Bergey's Manual of Determinative Bacteriology, "various spore-bearing rods which produce lactic acid, are facultative or aerobic and catalase positive, have generally and correctly been assigned to the genus *Bacillus'.* The characteristics of species *B. coagulans* as cited in 'Bergey's Manual of Determinative Bacteriology' (seventh edition) and other sources are "non pathogenic gram positive spore-forming bacteria (rods 0.9 by 3.0 to 5.0 micron size), aerobic to microaerophilic, producing L (+) lactic acid (dextrorotatory) in homofermentation conditions". species *B*. *coagulans* also release other metabolites like carbon dioxide, diacetyl, bacteriocins, lacto-peroxidase. It has been isolated from natural sources, such as heat-treated soil samples inoculated into nutrient medium (Bergey's Manual of Systemic Bacteriology, Vol. 2, Sneath, P.H.A. et al., eds., Williams & Wilkins, Baltimore, MD, 1986)

Since *B. coagulans* exhibits characteristics typical of both genera *Lactobacillus* and *Bacillus,* its taxonomic position between the families *Lactobacillaceae* and *Bacillaceae* has often been discussed. This along with the fact that there is no universally accepted official classification leaves room for controversy in the nomenclature. More information about *L.sporogenes* (also called herein *B. coagulans)* is available from the commercial brochure 69/107, incorporated herein by reference, of Sochim International s.p.a. Milano, a supplier of the spore form of *L*. *Sporogenes.*

There are a variety of different bacillus species, including, but not limited to, many different strains available through commercial and public sources, such as the American Tissue Culture Collection (ATCC). As already said some authors refer to *Bacillus coagulans as L*. *sporogenes*. *Bacillus coagulans* Hammer deposited as *Lactobacillus sporogenes* by Kabushiki Kaisha Naruse Fermentation Research Laboratory is commercially available under ATCC number 31284 (Internet information source: http://www.atcc.org/). *Bacillus coagulans* strains are further available as ATCC Accession Numbers 15949, 8038, 35670, 11369, 23498, 51232, 11014, 12245, 10545 and 7050. *Bacillus subtilis* strains are available as ATCC Accession Numbers 10783, 15818, 15819, 27505, 13542, 15575, 33234, 9943, 6051a, 25369, 11838, 15811, 27370, 7003, 15563, 4944, 27689, 43223, 55033, 49822, 15561, 15562, 49760, 13933, 29056, 6537, 21359, 21360, 7067, 21394, 15244, 7060, 14593, 9799, 31002, 31003, 31004, 7480, 9858, 13407, 21554, 21555, 27328 and 31524. *Bacillus laterosporus* strains are available as ATCC Accession Numbers 6456, 6457, 29653, 9141, 533694, 31932 and 64, including *Bacillus laterosporus* BOD. *Bacillus laevolacticus* strains are available as ATCC Accession Numbers 23495, 23493, 23494, 23549 and 23492.

It is understood herein that the spore-forming lactic acid producing micro-organisms as described herein also include the spores (dormant form) of the micro-organisms (living form). Such spores are typically activated due to the presence of substrate, temperature increase and pH change. The optimum growth temperature range for the spores of *B. coagulans* is between 30°C and 50°C and the optimum pH range is from 5.0 to 7.0.

*B. coagulans* spores are ellipsoidal bodies measuring 0.9 to 1.2 by 1.0 to 1.7 microns. These spores are commercially available in a white to greyish powder form. *B. coagulans* (also called L. sporogenes) spores powder is commercially available under the name LACTOSPORE® from SABINSA CORPORATION (Sochim international s.p.a, Milano). 1 gram of LACTOSPORE® corresponds to 15*10⁹ spores and thus to 15*10⁹ cfu (colony forming unit) of *B. coagulans* (L. *sporogenes).*

In the embodiment of the present invention wherein the spores as described herein before are used, the chewable compositions can be stored for longer periods of time before their actual use and still contain their whole antagonistic capacity up to the time the compositions are used. *Indeed B. coagulans* cells (in spore form) are protected from destruction by environmental factors by the naturally present micro encapsulation system, the spore coat. Advantageously in contrast to non-spores forming microorganisms, the spores have an increased stability and viability. Hence fewer precautions are needed to incorporate them in the chewing gum matrix during the chewing gum making process, resulting in easier process and more cost effective process of making such chewable compositions.

The spore forming lactic acid producing microorganisms, especially *B. coagulans,* are preferred herein as they have the ability to create very quickly an environment that is not suitable for the growth of pathogens. This is due to the rapid growth, high yield and reproducibility of such microorganisms in comparison to other lactic acid producing bacteria like *Lactobacillus acidophilus.* For example *B. coagulans* needs 30 minutes for one generation while *L. acidophilus* needs 80 minutes. Furthermore these microorganisms are spore forming lactic acid producing microorganisms, i.e., they are able to survive longer and reproduce themselves in comparison to non spore-forming microorganisms. These spores are activated by environmental changes like humidity, pH and temperature changes as well as availability of substrate. For instance when the chewable composition is masticated in mouth, favorable conditions are provided to promote the activation of the spores and bacteria growth: the temperature increases from room temperature (storage temperature) to 30°C - 35°C, humidity and substrates are provided (from saliva or food contamination) and pH is optimum (traditionally from 4 to 8). Such conditions will activate the germination/re-germination of the spores. The spore coat imbibe water, swell and the increased water content will cause an increase in the metabolic rate of the sporulated bacilli. Outgrowths will begin to protrude from the spore-coats. The outgrown cells germinate and transform into viable vegetative cell (also called 'living form' herein). The living form begin to proliferate multiplying rapidly. These living forms continue their metabolic activities producing lactic acid and other metabolites which render the environmental non-conducive for the growth of harmful pathogenic microorganisms. The germination process or so-called re-germination process (i.e., subsequent germination after the micro-organisms have been transformed into spores upon decrease of substrate availability) will be influenced by discharge of saliva, leading to a triggered germination/re-germination process on demand. In practice, all the spores will not germinate with the same kinetic due to natural intrinsic germination kinetic but as well to the triggering effect of mastication (activation upon contact with saliva in the mouth). In practice various factors might influence the mastication and hence the germination/regermination process, including but not limited to, the type of mastication proper to each individuals (duration and strength of mastication, sequences of interruption and restarting of mastication, saliva quality and quantity and so on).

Without to be bound by any theory, it is speculated herein that the long lasting odor control properties are due to the combined following mechanisms:
- the presence of the chewable composition into the mouth for relative long period of time in contrast to other oral 'fresh breath' treatments like mouthwash or rinsing solution,
- the presence of probiotic agents (as the active) that control the growth of pathogens and as a consequence the amount of malodorous compounds produced by these pathogens, thereby reducing or even preventing occurrence of bad breath,
- the release within the mouth of part of the probiotic agents (and their metabilites) from the chewable composition. Indeed, the mechanical friction resulting from the mastication/chewing within the mouth of the chewable composition combined with washing out effect resulting from salivation contribute to controlled release of the probiotic agents (and their metabolites) within the mouth throughout the mastication process resulting in controlled antagonistic action within the whole mouth cavity (i.e., with difference time sequences) and hence long lasting effect.
- in the preferred embodiment herein wherein spores-forming microorganisms are used, the mastication/chewing activates the spores within and outside the chewable composition at different time sequences. Indeed, the germination/regermination kinetic is different for those spores present within the chewable matrix and those released in the mouth, thereby further contributing to controlled and long lasting odor control properties.

Typically the number of probiotic agents, preferably lactic acid-producing microorganisms, in the chewable composition, is comprised between 10² cfu to 10¹², preferably from 10⁵ cfu to 10¹⁰ cfu, most preferably is between 10⁷ cfu to 10⁹ cfu.

In a preferred embodiment herein the chewable compositions of the present invention typically comprise from 0.01% to 10% by weight of total composition (e.g.,: 2 g/serving) of a probiotic agent or mixtures thereof, preferably from 0.05% to 6%.

The lactic acid producing microorganisms (living form) are typically used in a freeze-dried form. Their isolation process follows known routine processes for the isolation of pure cultures. The isolated pure cultures are then typed according to known methods, e.g., API. The desired lactic acid producing bacteria are then cultivated in a fermentor in a manner known per se, are separated from the medium using a separator or a centrifuge, are freeze-dried in a manner known per se and ground to a fine powder. The bacterial concentrate in powder so obtained is then typically mixed with a fermentable carbohydrate, e.g., glucose, to a desired concentration. Such powder is then ready for use in the chewable composition. Alternatively in some case it is possible to add the living bacteria to the chewable composition and then carry out a freeze-drying thereof. Another powder available form of the microorganisms herein is a lyophilized form.

### Growth of B. Coagulans

The growth of various *bacillus* species to form cell cultures, cell pastes and spore preparations is generally well known in the art. *B coagulans* growth described herein after can readily be used for the other *bacillus* species. B. coagulans is aerobic and facultative, it growths typically in nutrient broth, pH 5.5 to 6.8 containing up to 2% (by weight) NaCI, although neither NaCI nor KCI are required for growth. It is optimally grown at about 30°C to 55°C and the spores can withstand pasteurization. *B coagulans* can be grown in a variety of media, although it has been found that certain growth conditions produce a culture, which yields a high level of sporulation. For example, sporulation is enhanced if the culture medium includes 10 milligrams per liter of manganese sulfate, yielding a ratio of spores (dormant form) to vegetative cells (living form) of about 80:20. In addition certain growth conditions produce a bacterial spore which contains a spectrum of metabolic enzymes particularly suited for the present invention, i.e. control of pathogen microorganisms generating malodour development. Although spores produced by these particular growth conditions are preferred, spores produced by any compatible growth conditions are suitable for producing a B *coagulans* useful in the present invention.

Suitable media for growth of *B coagulans* includes Nutristart 701, PDB (potato dextrose broth), TSB (tryptic soy broth) and NB (nutrient broth) all well known and available from a variety of sources. Media supplements containing enzymatic digests of poultry and fish tissue, and containing food yeast are particularly preferred. A preferred supplement produces a media containing at least 60% protein, and about complex carbohydrates and 6% lipids. Media can be obtained from a variety of commercials sources, notably DIFCO (Detroit Ml), OXOID (Newark NJ) BBL (Cockeyesville MD) and Troy Biologicals (Troy Ml).

A particularly suitable procedure for the preparation of B. *Coagulans* is as follows. *B coagulans* Hammer bacterium (e.g., ATCC# 31284) was inoculated and grown in nutrient broth containing 5g Peptone, 3 g Meat extract, 10-30 mg MnSO₄ and 1000 ml distilled water adjusted to pH 7.0, using a standard airlift fermentation vessel at 30°C. The range of MnSO₄ acceptable for sporulation is 1mg/l to 1g/l. The vegetative cells can be actively reproduce up to 65°C and the spores are stable up to 90°C. After fermentation, the *B coagulans* Hammer bacterial cells are collected using standard methods (e.g., filtration, centrifugation) and the collected cells and spores can be lyophilized, spray dried, air dried or frozen. As described herein, the supernatant from the cell culture can be collected and used as an extracellular agent secreted by *B coagulans* which has antimicrobial activity useful in a formulation of this invention. A typical yield from the above culture is about 100 to 150 billion cells/spores per gram before drying. Spores maintain at least 90% viability after drying when stored at room temperature for up to seven years, and thus the effective shelf life of a composition containing *B coagulans* Hammer spores at room temperature is about 10 years.

### Sources of B coagulans

Purified *B coagulans* bacterium are available from the American type Culture Collection (Rockville, MD) using the following accession numbers: *B coagulans* Hammer NRS T27 (ATCC# 11014), *B coagulans* Hammer strain C (ATCC# 11369), *B coagulans* Hammer (ATCC # 31284) and *B coagulans* Hammer NCA 4259 (ATCC# 15949). Purified *B coagulans* bacterium are also available from the Deutsche Sammlung con Miroorganismen und Zellkuturen GmbH (Braunschweig, Germany) using the following accession numbers: *B coagulans* Hammer 1915^{AL} (DSM#2356), *B coagulans* Hammer 1915^{AL} (DSM#2383, corresponds to ATCC#11014), *B coagulans* Hammer^{AL} (DSM#2384, corresponds to ATCC#11369) and *B coagulans* Hammer^{AL} (DSM#2385, corresponds to ATCC# 15949). *B coagulans* Bacterium can also be obtained from commercial suppliers such as Sabinsa Corporation (Piscataway,NJ) Sochim International s.p.a. (Milano, Italy).

These *B coagulans* strains and their growth requirements have been described previously (Baker et al, Can.J.Microbiol. 6:557-563, 1960, Blumenstock, "Bacillus coagulans Hammer 1915 und andere thermophile oder mesophile, sauretolerante bacillus-Arten-eine taxonomische Untersuchung' Doctoral thesis, Univ. Gottingen, 1984, Nakamura et al, Int. J. Syst. Bacteriol, 38:63-73, 1988). Strains of *B coagulans* can also be isolated from natural sources (e.g., heat-treated soil samples) using well known procedures (*Bergey's Manual of Systemic Bacteriology,* Vol. 2, p. 1117, Sneath, P.H.A. et al , eds, Williams &Wilkins, Baltimore, MD, 1986).

Further description of Bacillus species of interest, namely *B coagulans* and properties thereof can be found in WO 98/47374 to Ganeden Biotech. Inc, incorporated herein by reference.

### Chewable base

According to the present invention the chewable compositions comprise as an essential component a chewable base.

The compositions of the present invention can take various forms including chewing gums, chewable tablets and chewing tobaccos. The composition comprises a chewable base appropriate to the desired product form. The chewable base acts to encourage retention of the composition in the oral cavity for a period of few minutes or more, for example by providing an insoluble mass which does not completely dissolve or disintegrate upon chewing.

Preferably, the compositions of the present invention are in the form of a chewing gum, in which case the chewable base is a chewing gum base as commonly known in the art. Chewing gums are conveniently portable and are often used several times a day. They are typically chewed for several minutes allowing time for active agents to take effect, particularly when, as in the present invention, the active agent can be released over prolonged time of the chew. As described herein before the chewing action itself releases saliva, which activates the spore form of spore forming micro-organisms exhibiting antagonistic properties against pathogens.

Chewing gums generally comprise an essentially tasteless, predominantly waterinsoluble masticatory portion (the gum base) and one or more additives, which may be water-soluble or water-extractable whose purpose is usually to improve the organoleptic properties of the gum. The chewing gum compositions of the present invention generally comprise from 10% to 90%, more preferably 20% to 70%, and most preferably from 30% to 60% of a chewing gum base by weight of the total composition.

An essential ingredient of the chewing gum base is an elastomer or elastomer mixture. Illustrative elastomers include styrene-butadiene rubber, synthetic gums or elastomers such as polyisobutylene and isobutylene-isoprene copolymers; natural gums or elastomers such as chicle, natural rubber, jelutong, balata, gutta-percha, lechicaspi, sorva and mixtures thereof. The elastomer or elastomer mixture is generally present in an amount of from 5% to 30% and preferably from about 7.5% to 25% by weight of the gum base.

An optional but desirable ingredient of the chewing gum base is a resin. The resin serves to plastizise the gum base. Suitable resins for use herein include polyvinyl acetate (PVA) and terpene resins, including polyterpene and polymers of alphapinene or beta-pinene, and mixtures thereof. The resin can conveniently be used at a level of from 5% to 25%, preferably from 8% to 20% by weight of the gum base.

In addition to the resin component, the gum bases useful in the present invention preferably comprise a plasticiser in an amount up to 10%, preferably from 0.1% to 3% by weight of the gum base. Suitable plasticisers include glyceryl triacetate, acetylated monoglyceride, glyceryl tributyrate, ethyl laurate, ethyl acetoacetate, diethyl tartrate, ethyl or butyl lactates, diethyl malate, ethyl oleate, castor oil, succinylated monoglycerides or mixtures thereof. Glyceryl triacetate and acetylated monoglyceride are preferred.

Various fats can also be included in the gum base. Preferred fats include the hydrogenated vegetable oils such as hydrogenated palm oil, hydrogenated soybean oil, hydrogenated cotton seed oil and various other hydrogenated vegetable oils and mixtures thereof. The fats can suitably be used at a level up to about 20%, preferably from about 1% to about 10% by weight of the gum base.

A further desirable ingredient of the chewing gum base is an elastomer solvent. The elastomer solvent aids in softening the elastomer component. Such elastomer solvents include methyl, glycerol or pentaerythritol esters of rosins or modified rosins, such as hydrogenated, dimerized or polymerised rosins or mixtures thereof.

Examples of elastomer solvents suitable for use herein include the pentaerythritol ester of partially hydrogenated wood rosin, pentaerythritol ester of wood rosin, glycerol ester of partially dimerized rosin, glycerol ester of polymerised rosin, glycerol ester of tall oil, wood or gum rosin, glycerol ester of partially hydrogenated rosin, methyl ester of partially hydrogenated rosin, and mixtures thereof. The elastomer solvent can be employed in an amount ranging from 2% to 50%, preferably from 10% to 35% by weight of the gum base.

The gum bases can also include one or more waxes. Suitable waxes include paraffin wax; n-ticrocrystalline wax; Fischer-Tropsch paraffin; -natural waxes such as candellilla, carnauba and beeswax; polyolefin waxes such as polyethylene wax; and mixtures thereof. The waxes can be present in levels up to 25%, preferably from 5% to 20% by weight of the gum base.

The gum base also preferably includes an emulsifier. Suitable emulsifiers include glycerol monostearate, lecithin, fatty acid monoglycerides, diglycerides, propylene glycol monostearate and mixtures thereof. The emulsifier is employed in amounts up to 10% and preferably from 2% to 6% by weight of the gum base.

A variety of softeners can also be employed in the gum bases useful in the present invention. Suitable softeners include fatty materials such as lanolin, stearic acid, sodium stearate and potassium stearate; polyhydric alcohols such as glycerine, sorbitol and the like; and mixtures thereof. The softeners can suitably be used at a total level of up to 30%, preferably from 0.1% to 10% by weight of the gum base. Preferably, the fatty softener is stearic acid. Such materials, when incorporated into the gum base, assist in modifying the texture and consistency properties. In particular, they help to soften the chew and to maintain chew softness over an extended period of time.

Bulking agents, such as fillers, can also be employed in the gum base. Suitable fillers and bulking agents are generally non-abrasive, preferably with an average particle size less than 5 microns, more preferably less than 3 microns and especially less than 1 microns.

Illustrative bulking agents include calcium carbonate or ground limestone, talc, aluminium hydroxide, alumina, aluminium silicates, dicalciurn phosphate and mixtures thereof. Where present, the filler can be used in levels up to 50%, preferably up to 30%, most preferably from up to 10% by weight of the gum base.

In preferred embodiments, the gum base further comprises a high intensity sweetener. Suitable high intensity sweeteners include: dipeptide based sweeteners such as Laspartyl-L-phenylaianine methyl ester (Aspartame) and equivalents described in U.S. Pat. No. 3,492,131, L-(x-aspartyl-N-(2,2,4,4-tetramethyl-3-thietanyl)-D-alaninan de hydrate (Alitame) and the like; the soluble saccharin salts, i.e., sodium or calcium saccharin salts; cyclamate salts, acesulfame-K and the like; the free acid form of saccharin; chlorinated derivatives of sucrose such as chlorodeoxysucrose and the like; and protein based sweeteners, such as Thaurnatin (talin). The high intensity sweeteners described can be added in amounts of from 0.01% to 2.0% and most preferably from 0.05% to 0.5% by weight of the gum base.

Using a high intensity sweetener within the gum base prolongs the flavour of the finished gum composition during chewing.

In addition, the gum base can also include colorants and pigments, such as titanium dioxide. In general, the gum base can contain up to about 2% of pigment and / or colorant. Anti-oxidants can also be included in the gum base, at a level of up to 0.5%. Suitable anti-oxidants are butylated hydroxyanisole, butylated hydroxytoluene, propyl gallate, ascorbic acid and tocopherols.

Finished gum bases are commercially available.

The chewing gum compositions of the present invention generally further comprise various organoleptic compounds, typically at levels of from 15% to 80%, preferably from 20% to 65%, and more preferably from 25% to 50% by weight of the total composition. As used herein, the term 'organoleptic compounds' means those ingredients which are added to the preprepared gum base to modify the aesthetic appreciation of the final chewing gum composition by the consumer, but does not include the various forms of active agent described above. Such ingredients have the principal purpose of providing flavour and sweetness to the gum, and of modifying and enhancing the gum's chewing characteristics or other use properties, such as tackiness or initial hardness. A variety of organoleptic additives can be used, including bulk and high intensity sweeteners, flavourants, softeners, and fillers.

Suitable bulk sweeteners are monosaccharides, disaccharides, and polysaccharides such as xylose, ribose, glucose, mannose, galactose, fructose, dextrose, sucrose, sugar maltose, flucto oligo saccharide syrups, partially hydrolysed starch, or corn syrup solids and sugar alcohols such as sorbitol, xylitol, mannitol, maltitol and mixtures thereof. Preferably the sugar alcohols are used since they are noncariogenic.

Suitable high intensity sweeteners are those described above as optional gum base ingredients.

In general, the amount of sweetener will vary with the sweetener used and desired amount of sweetener selected for a particular chewing gum. This amount will normally vary from 0.01 % when using a high intensity sweetener to 80% by weight of the chewing gum composition when using an easily extractable bulk sweetener. The bulk sweeteners described above, are preferably used in amounts of 30% to 70% by weight and most preferably 35% to 60% by weight. By contrast, the high intensity sweeteners described are used in amounts of 0.01% to 2.0% and most preferably 0.05% to 0.5% by weight of the final gum composition. These amounts are ordinarily necessary to achieve a desired level of sweetness independent from the flavour level achieved from the flavouring agents.

Flavouring agents well known in the chewing gum art can optionally be added to the chewing gum compositions of the invention. These flavouring agents can be chosen from synthetic flavouring liquid and/or oils derived from plants leaves, flowers, fruits and so forth, and combinations thereof. Representative flavoring liquids include: spearmint oil, cinnamon oil, oil of wintergreen (methylsalicylate) and peppermint oils.

Also useful are artificial, natural or synthetic fruit flavours such as citrus oil including lemon, orange, banana, grape, lime, apricot and grapefi-uit and fruit essences including apple, strawberry, cherry, orange, pineapple and so forth; bean and nut derived flavours such as coffee, cocoa, cola, peanut, almond and so forth.

The amount of flavourant employed is normally a matter of preference subject to such factors as flavour type, base type and strength desired. In general, amounts up to 4% by weight and preferably 0.05% to 3% by weight of the final chewing gum composition are usable with amounts of 0.8% to 2.5% being preferred.

Softeners can optionally be included in the chewing gum composition to improve the chew characteristics and mouth feel of the gum. The softeners will generally constitute from about 0.5% to about 15% by weight of the chewing gum composition and can include glycerine, lecithin, and mixtures thereof.

The chewing gum composition of this invention can additionally comprise other conventional additives inclusive of colouring agents such as titanium dioxide; emulsifiers such as lecithin and glyceryl monostearate; and fillers as described above, for example, dicalcium phosphate, aluminium hydroxide, and combinations thereof.

The total amount of fillers present is generally up to 10% by weight of the final composition.

An optional but highly preferred additive for use in the chewable compositions herein besides the probiotic agent, especially lactic acid-producing microorganisms, is an acidity controlling agent (also commonly called antiacid). Any acidity controlling agent known to those skilled in the art for controlling/neutralizing acidity might be used herein provided it is safe to the user. An example thereof is sodium bicarbonate. The presence of such additive contributes to prevent the occurrence of mouth health or comfort issue.

In an embodiment of the present invention the chewable compositions herein might also comprise an additional odor control material besides the probiotic agent to further reduce occurrence of bad breath. Any odor control material known to those skilled in the art for that purpose and being safe for oral application might be used herein. Such odor control materials might act per different mechanisms of action, e.g., by preventing the formation of odor or by removing/absorbing odors and/or per masking odors. Particularly suitable for use herein are odor absorbing materials like zeolite and/or silicate types materials.

### Manufacturing methods

All forms of the probiotic agents of the present invention can be incorporated into the compositions of the invention using methods well-known in the art. It is preferred to add the agents at a late stage in the process, at a temperature of less than 70°C, preferably less than 60°C, more preferably less than 55°C to avoid causing disruption to the probiotic agent.

Moreover, other than simply mixed in the chewing gum matrix, the probiotic agent can be "associated" to the chewing gum composition (with or without the help of a secondary carrier) forming a globally shaped structure (adjacent layers, dispersed within or at the surface of the chewing gum, etc.). Another possibility is to premix the probiotic agent in the chewing gum base so to control further the release of the probiotic agent in the mouth area.

In some instances, the probiotic agents can be included in the chewing gum composition after undergoing a protective coating which will break open during with the action of mastication and salivation.

Generally speaking, a special attention is given to the preparation protocol as this may influence greatly the final result of the chewing gum features both from a chewing gum texture and quality as well as for the efficiency of the probiotic agent.

The general techniques for manufacturing confectionery products of the type described herein can be found in "Skuse's Complete Confectioner", 13th Edition, 1957, published by W.J. Bush & Company Ltd, referred to above. A more up to date source giving fuller detail of suitable equipment is the "Silesia Confiserie Manual No. 3", published by Silesia-Essenzenfabrik Gerhard Hanke K.G., Abt. FachbOcherei.

The probiotic agent for use herein might be commercially available or produced according to method known in the art (see for example WO98/47374). For example *B Coagulans* might be used herein in a powder form, typically as a freeze-dried powder commercially available under ATCC number 31284 (ATCC= American Type Culture Collection). Alternatively B. coagulans spores powder is available commercially under name Lactospore® from Sabinsa Corporation (Sochim International S.P.A. Milano).

The following examples are given to illustrate the compositions according to the invention. However, the invention is not limited thereto.

Table I describes some examples of chewing gum compositions according to the invention.

**Table I**

| Chewing gum composition (w/w percent per total chewing gum composition) | Example 1 | Example 2 | Example 3 | Example 4 |
|---|---|---|---|---|
| Type and % gum base | PL228/01 from Cafosa, Spain 30% | PL228/01 from Cafosa 31.5% | PL228/01 from Cafosa 34% | P298/96 from Cafosa 34% |
| % additives* | 60% | 63.5% | 65.5% | 65.9% |
| Type of probiotic agent *B. coagulans* spores powder | Lactospore® from Sochim intl. | Lactospore® from Sochim intl. | Lactospore® from Sochim intl. | Lactospore® from Sabinsa Corp. |
| g (%) of probiotic agent (2g/serving) | 0.2g (10%) | 0.1g (5%) | 0.01g (0.5%) | 0.002g (0.1%) |
| Addition of the probiotic agent in the process of preparing the chewing gum compositions as described herein after | Before step 2, and mix 10 min. | After step 6, and mix 5 min. | After step 6, and mix 5 min. | After step 7, and with coating techniques. |

The chewing gum compositions are prepared by:
- Step 1: Softening the commercially available gum base by gentle warming and transfer the gum base into a kettle.
- Step 2: adding mannitol powder and mixing for approximately 5 minutes until an homogeneous mixture is obtained.
- Step 3: To this mixture, 2/3 of the sorbitol is slowly added during the mixing process, which lasts for about 10 minutes.
- Step 4: To this mixture maltitol syrup is added and mixing is continued for about 3 minutes.
- Step 5: The remaining third of the sorbitol is added, and mixing continued for about 5 minutes.
- Step 6: Then the glycerine, spray-dried menthol, hydrophobically coated menthol, aspartame, fat and peppermint oil, are added by turn, mixing after each additional ingredient for about 2 minutes.
- Step 7: The gum is discharged from the kettle, formed into chunks and conditioned to room temperature (24"C).

| *Additive composition : | |
|---|---|
| Peppermint oil | 3.2 |
| Spray-dried menthol (1) | 4.5 |
| Hydrophobically coated menthol (2) | 7.5 |
| Sorbitol | 55 |
| Fat (3) | 1 |
| Mannitol | 10.5 |
| Maltitol syrup (4) | 10.5 |
| Glycerine | 7.5 |
| Aspartame | 0.3 |
| Total (w/w percent) | 100 |

| | |
|---|---|
| (1) A water-releasable, entrapped menthol consisting essentially of 15:85 menthol:gum acacia | |
| (2) A hydrophobically coated menthol consisting essentially of 8:48:44 menthol:gurn acacia:hardened palm oil, prepared according to GB-A-1,327,761. The hardened palm oil has a melting point of 55-57°C. | |
| (3) Hardened palm oil having a melting point of 55-57°C | |
| (4) Lycasin, 85% solids, a product commercially available from Roquette | |

## Claims

1. A chewable composition comprising a chewable base and a probiotic agent.

2. A chewable composition according to claim 1 wherein the probiotic agent is a micro-organism exhibiting antagonistic properties against undesirable strains of micro-organisms

3. A chewable composition according to any of the preceding claims wherein the probiotic agent is a lactic acid-producing microorganism.

4. A chewable composition according to claim 3, wherein said lactic acid producing microorganism is selected from the group consisting of the genera Lactobacillus, Lactococcus, Pedioccocus, Leuconostoc, Sporolactobacillus, Bacillus and mixtures thereof, and preferably from the group consisting of the species *Bacillus coagulans, Bacillus subtilis, Bacillus laterosporus, Bacillus laevolacticus, Sporolactobacillus inulinus*, *Lactobacillus acidophilus, Lactobacillus curvatus*, *Lactobacillus plantarum*, *Lactobacillus jenseni, Lactobacillus casei, Lactobacillus fermentum*, *Lactococcus lactis, Pedioccocus acidilacti*, *Pedioccocus pentosaceus*, *Pedioccocus urinae*, *Leuconostoc mesenteroides* and mixtures thereof.

5. A chewable composition according to any of the preceding claims wherein the probiotic agent is a spore-forming micro-organism exhibiting antagonistic properties against undesirable strains of micro-organisms, preferably a spore-forming lactic acid-producing micro-organism, more preferably a species of the genus Bacillus and/or of the genus *Sporolactobacillus and most preferably a species selected from the group consisting of Bacillus coagulans, Bacillus subtilis*, *Bacillus laterosporus*, *Bacillus laevolacticus, Sporolactobacillus inulinus and mixture thereof* in their living form or dormant form (spore).

6. A chewable composition according to any of the preceding claims which is typically a chewing gum composition comprising from 0.01% to 10% of probiotic agent or mixtures thereof by weight of total composition and preferably from 0.05% to 6%.

7. A chewable composition according to any of the preceding claims which is typically a chewing gum composition comprising from 10% to 90% of chewing gum base by weight of the total composition, more preferably from 20% to 70%, and most preferably from 30% to 60%.

8. The use, in a chewable composition, typically a chewing gum, of probiotic agents, preferably spore-forming microorganisms, which exhibit antagonistic properties against undesirable strains of microorganisms (in their living or dormant form), for effective reduction of bad breath.

9. The use, in a chewable composition, typically a chewing gum, of probiotic agents, preferably spore-forming microorganisms, which exhibit antagonistic properties against undesirable strains of microorganisms, (in their living or dormant form), for long lasting odour control in use.
